# EUROPEAN PATENT SPECIFICATION

(11) **EP 2 041 841 B1**
(45) Date of publication and mention of the grant of the patent: **12.10.2016**
(21) Application number: 07813044.0
(22) Date of filing: 18.07.2007
(51) Int. Cl.: H01R 4/02

(54) **TERMINAL WELD TAB HAVING A WIRE SQUEEZE LIMITER**
GESCHWEISSTES ELEMENT MIT DRAHTQUETSCHUNGSBEGRENZUNG
PATTE À SOUDER DE BORNE AYANT UN LIMITEUR DE SERRAGE DE FIL

(30) Priority: 19.07.2006 US 831757 P; 03.04.2007 US 909739 P
(43) Date of publication of application: 01.04.2009
(73) Proprietor: BorgWarner, Inc., Auburn Hills, MI 48326-2872 (US)
(72) Inventor: HORN, Thomas, A., Eastpointe, MI 48021 (US)
(74) Representative: Leckel, Ulf
(86) International application number: PCT/US2007/073758
(87) International publication number: WO 2008/011449

(56) References cited:
- WO-A-2006/005291
- FR-A- 1 418 608
- US-A- 3 649 743

## Description

### CROSS-REFERENCE TO RELATED APPLICATIONS

This application claims the benefit of U.S. Provisional Application No. 60/831,757 filed July 19, 2006 and claims the benefit of U.S. Provisional Application No. 60/909,739 filed April 3, 2007.

### TECHNICAL FIELD

The field to which the disclosure generally relates includes products including an electrical connection terminal and methods of making and using the same.

### BACKGROUND

Electrical connection terminals have been soldered, welded, or crimped to wires or connection posts. The terminals typically may include a female connection portion, male connection portion or a press electrical connection portion for making an electrical connection by pressing to another terminal. Heretofore, a wire has been wrapped around a connection post of a solenoid coil and a terminal has been welded to the wire.

FR 1 418 608 A describes an electrical connection terminal with a weld tab. The weld tab is arranged and constructed to be welded to a cable. The weld tab has a wave-like configuration. Accordingly, the weld tab comprises a first wall and a second wall being disposed opposite to the first wall in the lateral direction of the cable to which the weld tab should be welded. The weld tab is not arranged and constructed to be wrapped around the cable.

WO 2006/005291 A discloses a method for connecting a wire to a contact element. In the contact area between the wire and the contact element there is provided a layer on the contact element for improving the electrical conductivity, said layer preferably consisting of tin.

US 3,649,743 A discloses a method for connecting a wire to an elongated post by providing a post and a portion of a wire wound around a portion of the post having a portion of the post exposed. In order to establish electrical contact between the wire and the post, a sleeve is inserted over the turns of the wire, pressing the wire against the sharp corners of the post thereby piercing the insulation of the wire. Neither the wire nor the sleeve is welded to the post.

### SUMMARY OF EXEMPLARY EMBODIMENTS OF THE INVENTION

One embodiment of the invention includes a product comprising an electrical connection terminal comprising at least a first weld tab. The first weld tab comprises an outer face and a weldable inner face. The weldable inner face comprises a substantially planar first portion and a substantially planar second portion, and wherein the first portion and the second portion are not in the same plane.

Another embodiment of the invention includes a product comprising an electrical connection terminal constructed and arranged to be welded to a post and a portion of a wire of a magnetic coil of a solenoid valve. The terminal comprises a weld tab comprising a magnetic wire squeeze limiter.

Another embodiment of the invention includes a process comprising providing a post and a portion of a wire wound around a portion of the post leaving a portion of the post exposed. An electrical connection terminal is planar second portion, and wherein the first portion and the second portion are not in the same plane.

Another embodiment of the invention includes a product comprising an electrical connection terminal constructed and arranged to be welded to a post and a portion of a wire of a magnetic coil of a solenoid valve. The terminal comprises a weld tab comprising a magnetic wire squeeze limiter.

Another embodiment of the invention includes a process comprising providing a post and a portion of a wire wound around a portion of the post leaving a portion of the post exposed. An electrical connection terminal is provided that includes at least a first weld tab comprising an outer face and a weldable inner face. The weldable inner face comprises a substantially planar first portion and a substantially planar second portion, and wherein the first portion and the second portion are not in the same plane. The substantially planar first portion is welded to the exposed portion of the post. Another embodiment further includes welding the substantially planar second portion to the portion of the wire wound around the post.

### BRIEF DESCRIPTION OF THE DRAWINGS

Exemplary embodiments of the present invention will become more fully understood from the detailed description and the accompanying drawings, wherein:
FIG. 1 illustrates one embodiment of the invention including a product including an electrical connection terminal.
FIG. 2 illustrates a sectional view taken along the line 2-2 of FIG. 1.
FIG. 3 illustrates a product of FIG. 1 viewed from the bottom along line 3 of FIG. 1.
FIG. 4 illustrates a product according to one embodiment of the invention including an electrical connection terminal and a solenoid valve including a post having a portion of the wire wound around the post.
FIG. 5 illustrates one embodiment of a post useful in the present invention.
FIG. 6 is a top view of a product including an electrical connection terminal having a weld tab positioned over a portion of a post having a wire wound around the post according to one embodiment of the invention.
FIG. 7 illustrates a method of welding an electrical connection terminal having a weld tab around a post having a wire wound around the post.
FIG. 8 illustrates a process according to another embodiment of the invention including welding a weld tab to a post having a wire wound around the portion thereof.
FIG. 9 illustrates a process according to another embodiment of the invention including welding an electrical connection terminal to a post and a wire having an insulation layer thereon and the wire being wound around a portion of the post so that the welding process ashes the insulation.
FIG. 10 illustrates a solenoid valve including a terminal post connected to the bobbin of a magnetic coil useful in the present invention.
FIG. 11 illustrates another embodiment of the invention including an electrical connection terminal having a male blade.
FIG. 12 illustrates another embodiment of the invention including an electrical connection terminal having two weld tabs.
FIG. 13 is a top view illustrating another embodiment of an electrical connection terminal including two weld tabs.
FIG. 14 is a front view of another embodiment of the invention including a product including an electrical connection terminal.
FIG. 15 is a top view of a product of FIG. 14.
FIG. 16 is a perspective view of a product of FIG. 14 including an electrical connection terminal and a solenoid valve including a post having a portion of a wire wound around the post.

### DETAILED DESCRIPTION OF EXEMPLARY EMBODIMENTS

The following description of the embodiment(s) is merely exemplary in nature and is in no way intended to limit the invention, its application, or uses.

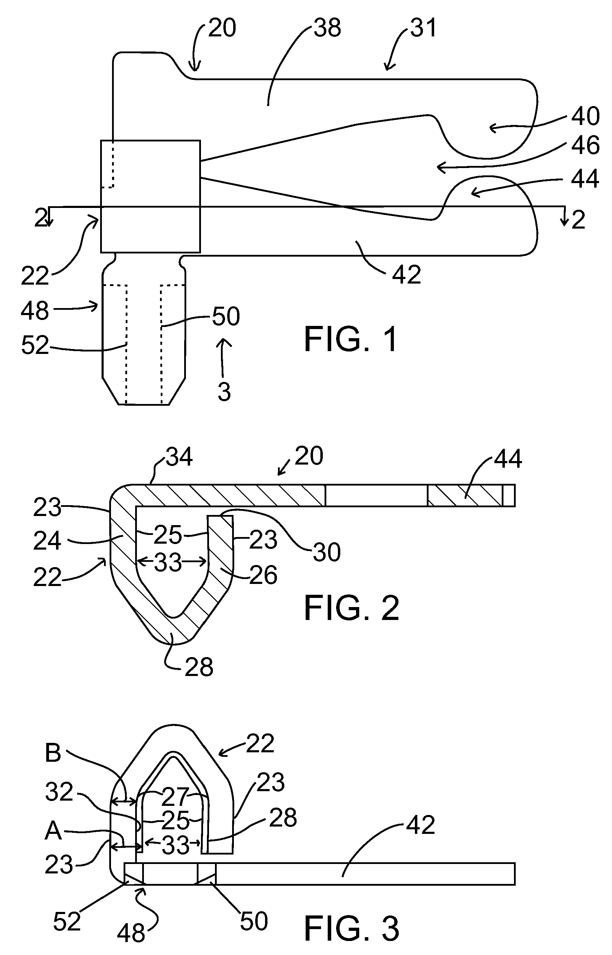

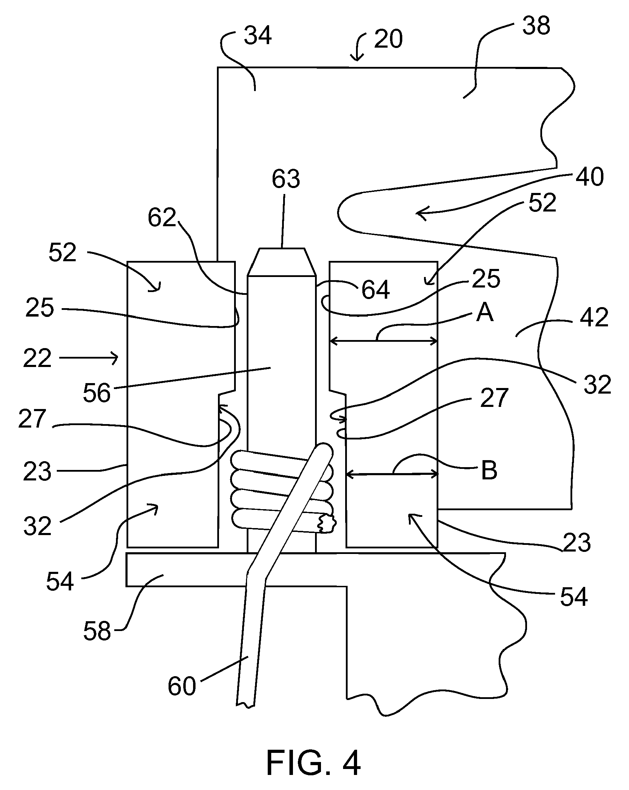

Referring now to FIGS. 1-4, one embodiment of the invention includes a product which may be an electrical connection terminal 20 having at least one terminal weld tab 22. The terminal weld tab 22 includes at least a first tab segment 24. Preferably, the terminal weld tab 22 includes a second tab segment 26 having a free end 30. A third tab segment 28 may be interposed between the first tab segment 24 and the second tab segment 26. The terminal weld tab 22 may be bent so that the first tab segment 24, second tab segment 26, and third tab segment 28 wrap around a portion of a post 56 to which the terminal weld tab 22 will be welded as described hereafter. Each of the first tab segment 24, second tab segment 26, and third tab segment 28, if present, may include an outer face 23 and a weldable inner face 33. The weldable inner face 33 may include a coined portion 32. The weldable inner face 33 may include a substantially planar first portion 25 and a substantially planar second portion 27, and wherein the first portion 25 and second portion 27 are not in the same plane. As shown in FIG. 3, terminal weld tab 22 may be constructed and arranged so that it includes a first portion 52 extending from the outer face 23 to the substantially planar first portion 25 of the weldable inner face 33 that has a first thickness illustrated by line A. A second portion 54 of the weld tab has a thickness extending from the outer face 23 to the substantially planar second portion 27 of the weldable inner face 33, illustrated by line B, thus providing a coined portion 32. The coined portion 32 of the terminal weld tab 22 is constructed and arranged to provide a magnetic wire squeeze limiter which limits the amount of pressure that can be applied to a wire 60 wrapped around a post 56 during the welding process as will be described hereafter. The coined portion 32 may be made, for example, by stamping or roll pressing a portion of the weld tab 22. In one embodiment, the coined area (indentation) is 0.23 mm and the thickness of the first portion 52 (line A) is 0.8 mm and the thickness of the second portion 54 (line B) is 0.57 mm. The post 56 may be secured to a bobbin 58 around which the wire 60 may be wrapped to provide a magnetic coil. For example, in one embodiment of the invention, a square post 56 may be press fit into a round hole formed in the bobbin 58 to secure the post 56 to the bobbin 58.

The electrical connection terminal 20 may further include a body portion 34 from which the terminal weld tab 22 may extend. An electrical connector portion 31 may also extend from the body portion 34 for making an electrical connection to another terminal. The electrical connection portion 31 may have any configuration known to those skilled in the art including, but not limited to, a female portion, male portion or a press terminal portion constructed and arranged to make electrical contact by pressing to a portion of another terminal. The embodiment illustrated in FIGS. 1-4 includes a female portion including an upper jaw 38 which may have a first nub 40 near an end thereof and a lower jaw 42 which may have a second nub 44 near an end thereof. An opening 46 is provided between the upper jaw 38 and lower jaw 44, for example, to receive a male blade of another terminal. As shown in FIG. 1, the electrical terminal 20 may further include a support blade 48 and coined areas 50, 52. The support blade may be press fit into a slot formed in the bobbin 58 to secure the terminal to the bobbin 58. The coined areas 50, 52 provide additional strength.

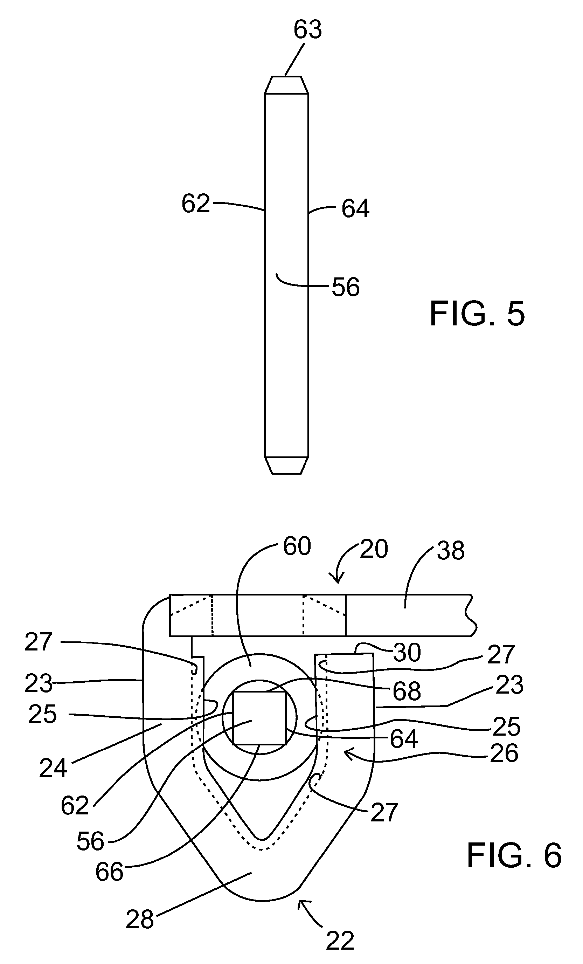

Referring now to FIGS. 5-6, in one embodiment of the invention, the post 56 may include a first flat face 62 and an opposite second flat face 64. In another embodiment, the post 56 may include a third flat face 66 and an opposite fourth flat face 68, and a top 63. The electrical terminal 20 is placed so that the substantially planar first portion 25 of the weldable inner face 33 is positioned adjacent the first flat face 62 of the exposed portion of post 56. Likewise, the substantially planar first portion 25 of the weldable inner face 33 of the second tab segment 26 is positioned adjacent the second flat face 64 of the exposed portion post 56. The substantially planar second portion 27 of the weldable inner face 33 of the first segment 24 and second segment 26 are positioned adjacent to the portion of the wire 60 wrapped around the post 56.

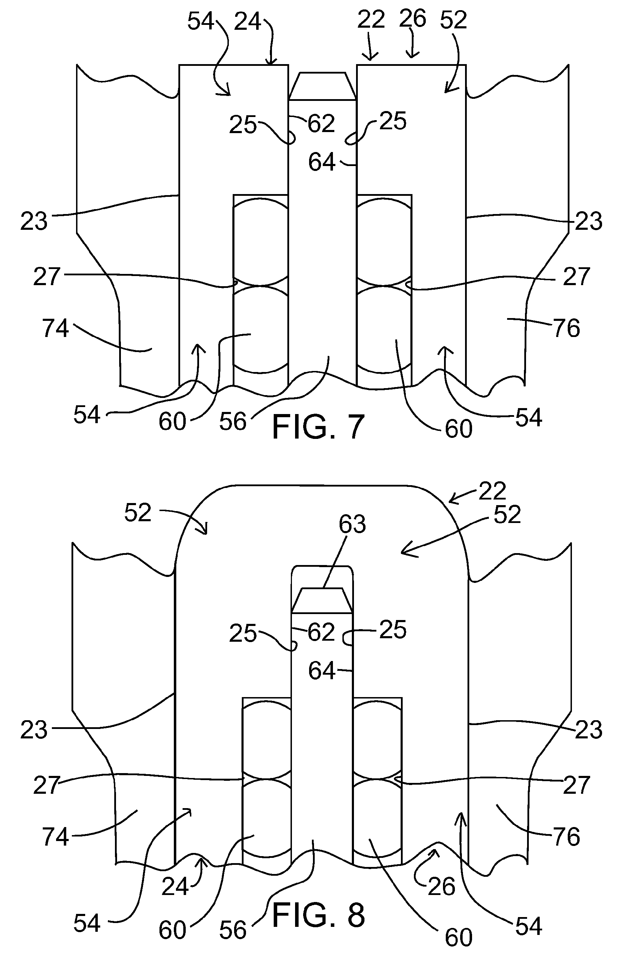

Referring now to FIG. 7, one embodiment of the invention includes a process in which a first welding electrode 74 is placed against the outer face 23 of the weld terminal tab 22 such that the substantially planar first portion 25 of the first segment 24 engages the first flat face 62 of the exposed portion of post 56 so that the substantially planar first portion 25 of the first segment 24 is welded to the flat face 62 of the exposed portion of the post 56. A second weld electrode 76 is pressed against the outer face 23 of the second segment 26 of the terminal weld tab 22 so that the substantially planar first portion 25 of the second segment 26 is welded to the flat face 64 of the exposed portion of post 56. At the same time, the substantially planar second portion 27 of the first segment 24 and the substantially planar second portion 27 of the second segment 26 are each welded to a portion of the wire 60 wrapped around the post 56. In one embodiment of the invention, suitable welding parameters include, but are not limited to, about 0.7-0.76 Volts and at a pressure ranging from about 9 to about 15 pounds force.

Referring now to FIG. 8, another embodiment of the invention includes a weld tab 22 which, instead of being wrapped around the post 56 as shown in FIG. 7, is wrapped over the top 63 of the post 56. A first portion 52 and second portion 54 may still be provided on the weld tab 22.

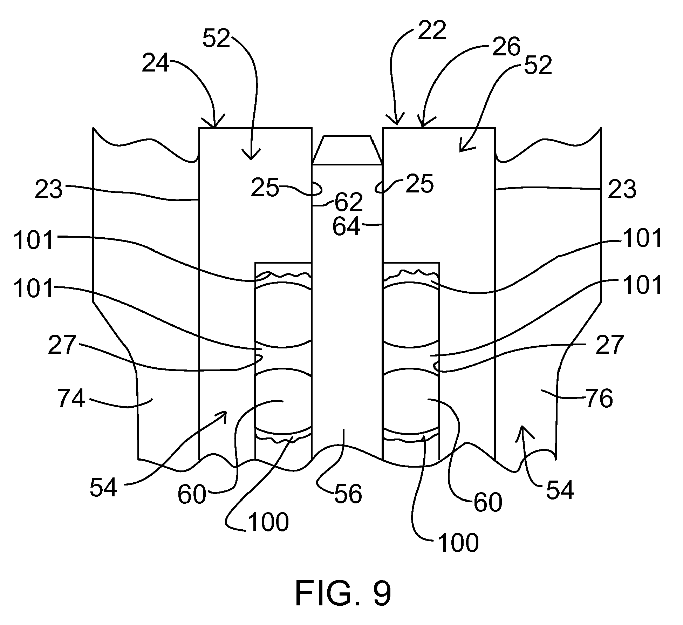

Referring now to FIG. 9, another embodiment of the invention includes using a wire 60 including an insulative coating 101 thereon. As the weld tab 22 is welded to the post 56 and the wire 60, the insulative coating 101 is ashed during the welding process. With reference to the embodiments illustrated by FIGS. 7-9, the electrodes 74, 76 may be constructed and arranged and the welding process conducted such that greater pressure may be applied by the electrodes 74, 76 to the first section 52 of each of the first segment 24 and second segment 26 of the weld tab compared to the second section 54 of the weld tab 22 so that the pressure applied to the wire 60 wrapped around the post 56 is limited.

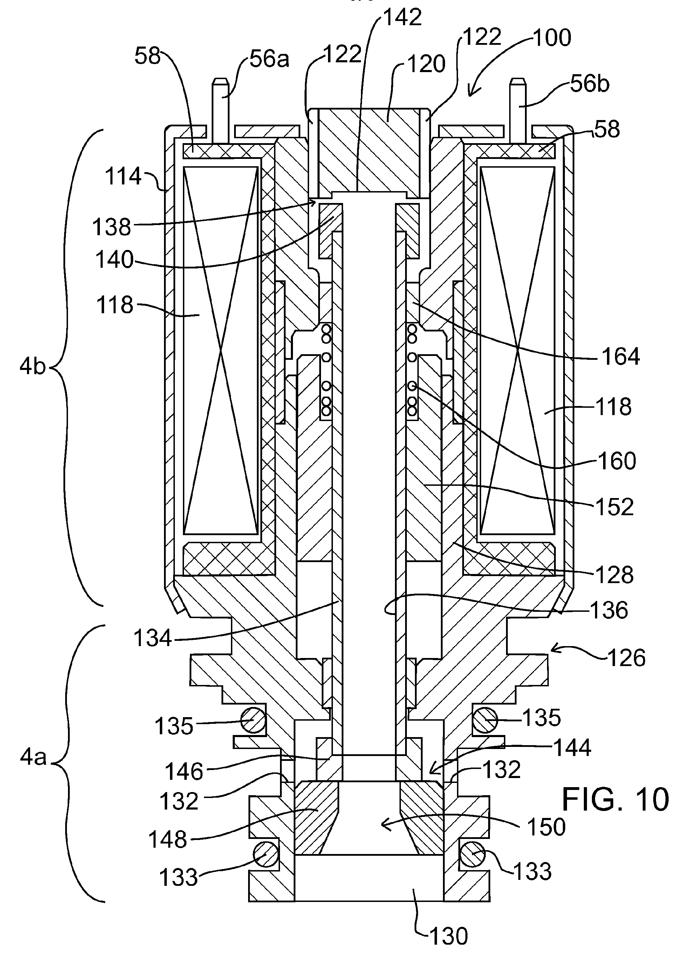

Referring now to FIG. 10, one embodiment of the invention includes a product 100 which may be a dual-poppet low leak variable bleed solenoid valve. The valve 100 may include a solenoid portion 124b which includes a housing 114 that encases a bobbin 58 having a coil 118 wound around the bobbin 58. The coil 118 is made from the wire 60. A first terminal post 56a is secured to the bobbin 58 in one position and extends through the housing 114. The first post 56a, for example, may be used as a positive terminal for the coil 118. A second post 56b is provided in a second location and secured to the bobbin 58 and extends through the housing 114. The second post 56b, for example, may be utilized as a negative post for the coil 118. An electrical connection terminal 20 (not shown) according to one of the various embodiments of the invention as disclosed herein may be welded to each of the first post 56a and second post 56b. The solenoid portion 124b may also include an end cap 120 that has exhaust ports 122 disposed about the end cap 120.

The valve 100 may have a hydraulic portion 124a that has a valve housing 126 that is connected to the solenoid portion 124b. The valve housing 126 may include a flux tube portion 128 that slides into the solenoid portion 124b adjacent to the bobbin 58. The hydraulic portion 124a may also include a volume control 130 that is located at the end of the valve housing 126. A supply port 132 is connected through the valve housing 126 at a position located above the control volume 130. The valve housing 126 may be mated to an external bore and a first O-ring seal 133 separates the supply pressure region that is external to the valve housing 126 from the volume control 130. A second O-ring seal 135 separates the supply pressure region that is external to the valve housing 126 from the ambient or sump pressure region. A valve shaft 134 may be provided and is slidably disposed through the solenoid portion 124b and extends longitudinally into the hydraulic portion 124a. The valve shaft 124 includes a channel 136 therethrough that allows the passage of fluid from the hydraulic portion 124a to the solenoid portion 124b. The channel 136 includes a first end that terminates at a primary valve 138 located within the solenoid portion 124b. The primary valve 138 is formed of a primary poppet 140 that is formed about the end of the valve shaft 134, and a primary valve seat 142 that is formed at the end cap 120. Together the primary poppet 140 and the primary valve seat 142 form the primary valve 138 which is opened and closed by the sliding of the valve shaft 134 along its longitudinal axis.

The channel 136 has a second end that terminates at a secondary valve 144 located in the hydraulic portion 124a. The secondary valve 144 is formed of a secondary poppet 146 which is the end of the valve shaft 134. The secondary poppet 146 is configured to slidably seat against the secondary valve seat 48 which has an aperture 150 that extends through the secondary valve seat 148 to the control volume 130.

In operation, the valve 100 functions in response to current flowing through the coil 118. When an increasing current is applied to the coil 118, the valve shaft 134 will slide in a first direction along its longitudinal axis. In order to facilitate the movement of the valve shaft, an armature 152 is annually disposed about and fixed to the valve shaft 134. The armature 152 is affected by the magnetic flux generated as a result of current flowing through the coil 118. This causes a linear movement of the valve shaft 134 that is proportional to the degree of current flowing through the coil 118 in the solenoid portion 124b. When the solenoid portion 124b is energized, the valve shaft 134 will slide in a first direction towards the end cap 120 so that the primary poppet 140 will seat against the primary valve seat 142, thus closing off the primary valve 138. Simultaneously, the secondary valve 144 will be opened as the movement of the valve shaft 134 will cause the secondary poppet 146 to move away from the secondary valve seat 148. When the current flowing through the coil 118 is stopped or reduced, the solenoid portion 124b is de-energized and a spring 160 will cause the armature 152 to slide in a second direction opposite the movement of the armature when the coil is energized. The spring 160 may be disposed about the armature 152 and the upper bearing 164. When the solenoid portion 124b is de-energized, the spring 160 will exert a force against the armature 152 to cause the valve shaft 134 to move in the opposite direction so that the secondary valve 144 is closed as the secondary poppet 146 contacts the secondary valve seat 148. Simultaneously, the primary valve 138 will move to a fully open position as the primary poppet 140 moves away from the primary valve seat 142. These and other features, and operations of the embodiment illustrated in FIG. 10 are disclosed in U. S. Patent Application No. 2005/0269538, filed June 7, 2004, the disclosure of which is hereby incorporated by reference.

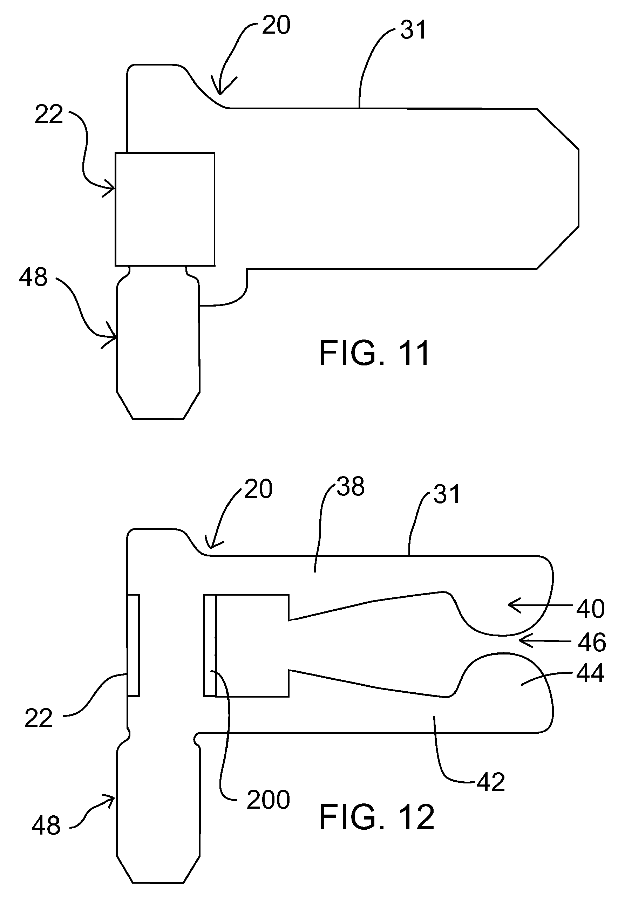

FIG. 11 illustrates another embodiment of the invention including an electrical connection terminal 20 including an electrical connector portion 31 which is a male blade. The electrical terminal 20 includes at least one weld terminal tab 22 as described above.

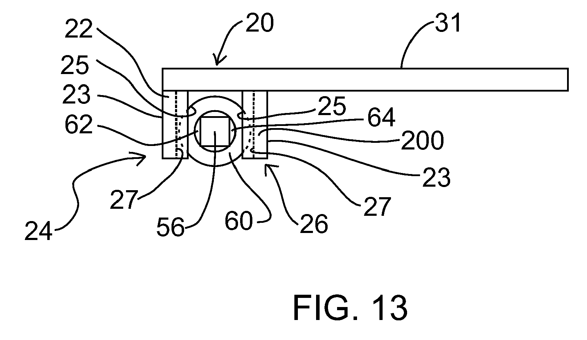

FIG. 12 illustrates another embodiment of the invention including an electrical terminal 20 which includes a first weld tab 22 and a second weld tab 200. In this embodiment, the first weld tab 22 and the second weld tab 200 do not necessarily wrap around the post to which they will be welded. FIG. 13 is a top view of an electrical connection terminal 20 similar to that shown in FIG. 12. The electrical terminal 20 includes an electrical connector portion 31 and a first weld tab 22 which is constructed in a similar fashion as segment 24 illustrated in FIGS. 2-3 and 6. The electrical terminal 20 also includes a second weld tab 200 which may be constructed in a fashion similar to the second segment 26 of weld tab 22 shown in FIGS. 2-3 and 6.

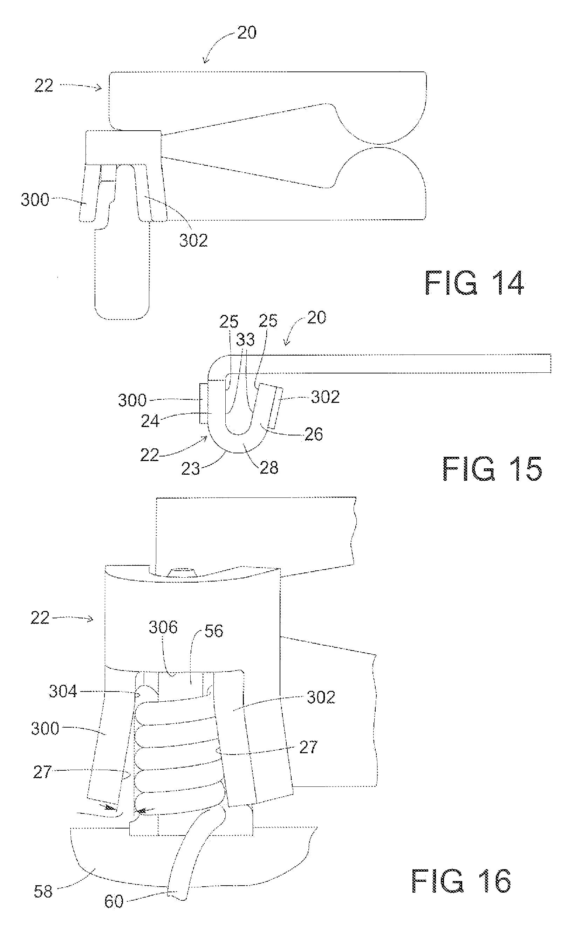

FIGS. 14-16 illustrate another embodiment of the electrical connection terminal 20 having at least one terminal weld tab 22. The terminal weld tab 22 may include the first tab segment 24, the second tab segment 26, and the third tab segment 28 interposed the first tab segment and the second tab segment. Each of the tab segments, if present, may include the outer face 23 and the weldable inner face 33. The weldable inner face 33 may include the substantially planar first portion 25 and the substantially planar second portion 27, wherein the planar first portion 25 and the planar second portion 27 are not in the same plane. The terminal weld tab 22 may be constructed and arranged with a first flared tab portion 300 and a second flared tab portion 302 that together provide the magnetic wire squeeze limiter which limits the amount of pressure that can be applied to the wire 60 wrapped around the post 56 during the welding process. One or more of the flared tab portions may be provided in other embodiments. The post 56 may be secured to the bobbin 58 around which the wire 60 may be wrapped to provide the magnetic coil.

The first flared tab portion 300 and the second flared tab portion 302 serve as the magnetic wire squeeze limiter by limiting the pressure applied by the electrodes 74 and 76 to the wire 60 at the second portion 54. Each flared portion may be bent at an angle θ with respect to the first, second, and third tab segments 24, 26, and 28. As shown, the angle θ may be about 8-12°. Such an angle imparts a certain amount of resiliency in the flared tab portions such that when the electrodes 74 and 76 squeeze and bend them during welding, the flared tab portions exert a counterforce which limits the total amount of force exerted on the wire 60 at the flared tab portions. The first flared tab portion 300 extends from the first tab segment 24 while the second flared tab portion 302 extends from the second tab segment 26. Each of the flared tab portions may define a plane that constitutes the planar second portion 27 in this embodiment. A step 304 may be impressed between the respective flared tab portions and the tab segments to create a slight offset between the planar first portion 25 and the planar second portion 27 even when the planar portions are welded to the post 56 and the wire 60. A cutout 306 may be slit between the first flared tab portion 300 and the second flared tab portion 302 such that when the electrodes 74 and 76 squeeze the flared tab portions, a section of the wire 60 is not directly squeezed by the flared tab portions or any other portion.

The electrical terminal 20 as described herein may be made from any electrically conductive material known to those skilled in the art and may include materials that are weldable, or may include at least one coating thereon that is weldable. In one embodiment of the invention, the electrical terminal 20 is made from a metal comprising a copper alloy, a brass alloy, or the like which optionally may be plated or coated with a first layer, such as nickel. A second layer may overlie first layer or may be deposited directly on the underlying base metal material. The second layer, in one embodiment of the invention, includes tin. Likewise, the post 56 may be made out of any electrically conductive material and may be made from a weldable material or may include a weldable coating thereon. In one embodiment of the invention, the post 56 includes a base metal comprising iron and carbon, and an optional first layer thereon comprising nickel. A second layer may be deposited directly on the base metal or over the optional first layer. The second layer, in one embodiment of the invention, may include tin.

## Claims

1. A product comprising:
an electrical connection terminal (20) comprising at least a first weld tab (22), the first weld tab (22) comprising an outer face (23) and a weldable inner face (33), the weldable inner face (33) comprising a planar first portion (25) and a planar second portion (27), and wherein the first portion (25) and second portion (27) are not in the same plane, **characterized in that** the first weld tab (22) is constructed and arranged to wrap around a portion of a post (56) and is constructed and arranged to be welded to the post (56).

2. A product as set forth in claim 1 wherein the post (56) has a first flat face (62) and a second flat face (64), and wherein the weld tab (22) is constructed and arranged to be welded to both of the first flat face (62) and second flat face (64) of the post (56).

3. A product as set forth in claim 2 wherein the post (56) has four sides (62, 64, 66, 68) and the first weld tab (22) is constructed and arranged to wrap around at least three sides of the four sides of the post (56).

4. A product as set forth in claim 2 wherein the post (56) comprises a first flat face (62) and a second flat face (64) and the weld tab (22) is constructed and arranged to wrap over the top (63) of a post and at least a portion of the first flat face (62) and a portion of the second flat face (64).

5. A product as set forth in claim 1 wherein the terminal (20) comprises a base material and at least a first coating thereon comprising tin.

6. A product as set forth in claim 1 further comprising a post (56), and wherein the terminal (20) comprises a base with material and at least a first coating comprising tin, and wherein the post (56) comprises a base material and at least a first coating comprising tin.

7. A product as set forth in claim 1 wherein the first weld tab (22) comprises a first flared tab portion (300) and a second flared tab portion (302), wherein each of the flared tab portions are positioned outside of a post 56, and each constituting the second portion (27).

8. A product as set forth in claim 7 wherein the first flared tab portion (300) extends from a first tab segment (24) of the first weld tab (22), and the second flared tab portion (302) extends from a second tab segment (26) of the first weld tab (22).

9. A product comprising:
a wire (60) of a magnetic coil (118) of a solenoid valve (100) and an electrical connection terminal (20) according to claim 1.

10. A product as set forth in claim 9 wherein the magnetic wire squeeze limiter comprises a coined portion (32) of the first weld tab.

11. A product as set forth in claim 9 further comprising a post (56) and a wire (60) having a portion wound around the post and so that a portion of the post is exposed with no wire thereon, and wherein at least a first segment (24) of the first weld tab includes a first face (25) and a second face (27) and wherein the first face (25) is welded to the exposed portion of the post (56) and the second face (27) is welded to at least a portion of the wire (60) wound around the post (56).

12. A product as set forth in claim 11 wherein the product further includes a bobbin (58) and wherein the post (56) is secured to the bobbin (58).

13. A product as set forth in claim 12 wherein the wire (60) includes a portion repeatedly wound around the bobbin (58) to form a magnetic coil (118).

14. A product as set forth in claim 9 wherein the terminal (20) further comprises a male blade electrical connection portion (31).

15. A product as set forth in claim 9 wherein the terminal further comprises a female electrical connection portion (31).

16. A product as set forth in claim 15 wherein the female electrical connection portion includes a pair of opposed jaws (38, 42) with an opening (46) therebetween.

17. A product as set forth in claim 9 wherein the first weld tab (22) comprises a base metal and a coating comprising tin thereon.

18. A product as set forth in claim 11 wherein the post (56) comprises a base metal and a coating thereon comprising tin, and wherein the terminal (20) comprises a base metal and a coating thereon comprising tin.

19. A product as set forth in claim 9 wherein the first weld tab (22) includes a first segment (24), second segment (26), and a third segment (28) interposed between the first and second segments (24, 26), and wherein the first, second and third segments (24, 26, 28) are constructed and arranged to wrap around a portion of a post (56).

20. A product as set forth in claim 9 wherein the first weld tab (22) comprises a first segment (24) and an opposite second segment (26).

21. A product as set forth in claim 9 wherein the magnetic wire squeeze limiter comprises a coined portion (32) of the first weld tab (22).

22. A product as set forth in claim 9 wherein the thickness of the weld tab (22) at a first portion (52) as measured by the distance from the outer face (23) to the substantially planar first portion (25) is greater than the thickness of the weld tab (22) at a second portion (54) as measured by the distance from the outer face (23) to the substantially planar inner portion (27).

23. A product as set forth in claim 9 wherein the electrical connection terminal (20) further comprises a second weld tab (200) comprising a magnetic wire squeeze limiter (32).

24. A product as set forth in claim 9 wherein the magnetic wire squeeze limiter comprises a first flared tab portion (300) and a second flared tab portion (302), each extending from the first weld tab (22).

25. A product as set forth in claim 24 wherein the first weld tab (22) comprises a first tab segment (24) and an opposite second tab segment (26), and wherein the first flared tab portion (300) extends from the first tab segment (24) and the second flared tab portion (302) extends from the second tab segment (26).

26. A process comprising:
providing a post (56) and a portion of a wire (60) wound around a portion of the post leaving a portion of the post exposed and providing an electrical connection terminal (20) according to claim 1.

27. A process as set forth in claim 26 further comprising welding the substantially planar second portion (27) to the portion of the wire (60) wound around the post (56).

28. A process as set forth in claim 26 wherein the post (56) has four sides (62, 64, 66, 68), and wherein the first weld tab (22) is constructed and arranged to wrap around three sides of the post (56).

29. A process as set forth in claim 27 wherein the post (56) includes four sides (62, 64, 66, 68) each having a flat face, and wherein the first weld tab (22) includes a first segment (24), a second segment (26), and a third segment (28) interposed between the first segment (24) and second segment (26), and wherein the first, second and third segments (24, 26, 28) are constructed and arranged to wrap around a portion of the post (56) so that the first segment (24) is adjacent a first side (62) of the post (56), and the second segment (26) is adjacent a second side (64) of the post (56), and wherein the welding further comprises placing a first electrode (74) against the outer face (23) of the first segment (24) and placing a second electrode (76) against the outer surface (23) of the second segment (26) and pressing the second segment (26) and the first segment against the post (56) and so that greater pressure is applied to the substantially planar first portion (25) of the first segment (24) and second segment (26) than is applied to the substantially planar second portion (27) of the first segment (24) and second segment (26) of the weld tab (22).

30. A process as set forth in claim 26 wherein the electrical connection terminal (20) further comprises a second weld tab (200) comprising an outer face (23) and a weldable inner face (33), the weldable inner face (33) of the second weld tab (200) comprising a substantially planar first portion (25) and a substantially planar second portion (27), and wherein the first portion (25) and the second portion (27) of the second weld tab (200) are not in the same plane, and further comprising welding the substantially planar first portion (25) of a second weld tab (200) to an exposed portion of the post (56).

31. A product as set forth in claim 26 wherein the first weld tab (22) comprises a first flared tab portion (300) and a second flared tab portion (302), wherein each of the flared tab portions constitute the second portion (27).

32. A product as set forth in claim 31 wherein the first flared tab portion (300) extends from a first tab segment (24) of the first weld tab (22), and the second flared tab portion (302) extends from a second tab segment (26) of the first weld tab (22).

## Patentansprüche

1. Produkt, umfassend:
eine elektrische Anschlussklemme (20), die mindestens eine erste geschweißte Kontaktfahne (22) umfasst, wobei die erste geschweißte Kontaktfahne (22) eine Außenfläche (23) und eine schweißbare Innenfläche (33) umfasst, die schweißbare Innenfläche (33) einen planen ersten Abschnitt (25) und einen planen zweiten Abschnitt (27) umfasst, und wobei der erste Abschnitt (25) und der zweite Abschnitt (27) nicht in der gleichen Ebene liegen, **dadurch gekennzeichnet, dass** die erste geschweißte Kontaktfahne (22) so ausgebildet und angeordnet ist, dass sie sich um eine Säule (56) wickelt, und so ausgebildet und angeordnet ist, dass sie an die Säule (56) geschweißt ist.

2. Produkt nach Anspruch 1, wobei die Säule (56) eine erste flache Fläche (62) und eine zweite flache Fläche (64) aufweist, und wobei die geschweißte Kontaktfahne (22) so ausgebildet und angeordnet ist, dass sie an beide der ersten flachen Fläche (62) und der zweiten flachen Fläche (64) der Säule (56) geschweißt ist.

3. Produkt nach Anspruch 2, wobei die Säule (56) vier Seiten (62, 64, 66, 68) aufweist, und die erste geschweißte Kontaktfahne (22) so ausgebildet und angeordnet ist, dass sie sich um mindestens drei Seiten der vier Seiten der Säule (56) wickelt.

4. Produkt nach Anspruch 2, wobei die Säule (56) eine erste flache Fläche (62) und eine zweite flache Fläche (64) umfasst, und die geschweißte Kontaktfahne (22) so ausgebildet und angeordnet ist, dass sie sich über die Oberseite (63) einer Säule und mindestens einen Abschnitt der ersten flachen Fläche (62) und einen Abschnitt der zweiten flachen Fläche (64) wickelt.

5. Produkt nach Anspruch 1, wobei die Klemme (20) ein Basismaterial und mindestens eine erste Beschichtung darauf umfasst, die Zinn umfasst.

6. Produkt nach Anspruch 1, ferner umfassend eine Säule (56), und wobei die Klemme (20) eine Basis mit Material und mindestens eine erste Beschichtung umfasst, die Zinn umfasst, und wobei die Säule (56) ein Basismaterial und mindestens eine erste Beschichtung umfasst, die Zinn umfasst.

7. Produkt nach Anspruch 1, wobei die erste geschweißte Kontaktfahne (22) einen ersten aufgeweiteten Kontaktfahnenabschnitt (300) und einen zweiten aufgeweiteten Kontaktfahnenabschnitt (302) umfasst, wobei jeder der aufgeweiteten Kontaktfahnenabschnitte außerhalb einer Säule (56) positioniert ist und jeder den zweiten Abschnitt (27) bildet.

8. Produkt nach Anspruch 7, wobei der erste aufgeweitete Kontaktfahnenabschnitt (300) sich von einem ersten Kontaktfahnensegment (24) der ersten geschweißten Kontaktfahne (22) erstreckt, und der zweite aufgeweitete Kontaktfahnenabschnitt (302) sich von einem zweiten Kontaktfahnensegment (26) der ersten geschweißten Kontaktfahne (22) erstreckt.

9. Produkt, umfassend:
einen Draht (60) einer Magnetspule (118) eines Solenoidventils (100) und eine elektrische Anschlussklemme (20) nach Anspruch 1.

10. Produkt nach Anspruch 9, wobei der Magnetdrahtquetschungsbegrenzer einen geprägten Abschnitt (32) der ersten geschweißten Kontaktfahne umfasst.

11. Produkt nach Anspruch 9, ferner umfassend eine Säule (56) und einen Draht (60) mit einem derart um die Säule gewickelten Abschnitt, dass ein Abschnitt der Säule ohne Draht darauf freiliegend ist, und wobei mindestens ein erstes Segment (24) der ersten geschweißten Kontaktfahne eine erste Fläche (25) und eine zweite Fläche (27) umfasst, und wobei die erste Fläche (25) an den freiliegenden Abschnitt der Säule (56) geschweißt ist, und die zweite Fläche (27) an mindestens einen Abschnitt des Drahtes (60) geschweißt ist, der sich um die Säule (56) wickelt.

12. Produkt nach Anspruch 11, wobei das Produkt ferner einen Spulenträger (58) umfasst, und wobei die Säule (56) am Spulenträger (58) befestigt ist.

13. Produkt nach Anspruch 12, wobei der Draht (60) einen Abschnitt umfasst, der wiederholt um den Spulenträger (58) gewickelt ist, um eine Magnetspule (118) zu bilden.

14. Produkt nach Anspruch 9, wobei die Klemme (20) ferner einen elektrischen Flachstecker-Anschlussabschnitt (31) umfasst.

15. Produkt nach Anspruch 9, wobei die Klemme ferner einen elektrischen Buchsen-Anschlussabschnitt (31) umfasst.

16. Produkt nach Anspruch 15, wobei der elektrische Buchsen-Anschlussabschnitt ein Paar gegenüberliegender Backen (38, 42) mit einer Öffnung (46) dazwischen umfasst.

17. Produkt nach Anspruch 9, wobei die erste geschweißte Kontaktfahne (22) ein Basismetall und eine Beschichtung darauf umfasst, die Zinn umfasst.

18. Produkt nach Anspruch 11, wobei die Säule (56) ein Basismetall und eine Beschichtung darauf umfasst, die Zinn umfasst, und wobei die Klemme (20) ein Basismetall und eine Beschichtung darauf umfasst, die Zinn umfasst.

19. Produkt nach Anspruch 9, wobei die erste geschweißte Kontaktfahne (22) ein erstes Segment (24), ein zweites Segment (26) und ein drittes Segment (28) umfasst, das zwischen die ersten und zweiten Segmente (24, 26) eingefügt ist, und wobei die ersten, zweiten und dritten Segmente (24, 26, 28) so ausgebildet und angeordnet sind, dass sie sich um einen Abschnitt einer Säule (56) wickeln.

20. Produkt nach Anspruch 9, wobei die erste geschweißte Kontaktfahne (22) ein erstes Segment (24) und ein gegenüberliegendes zweites Segment (26) umfasst.

21. Produkt nach Anspruch 9, wobei der Magnetdrahtquetschungsbegrenzer einen geprägten Abschnitt (32) der ersten geschweißten Kontaktfahne (22) umfasst.

22. Produkt nach Anspruch 9, wobei die Dicke der geschweißten Kontaktfahne (22) an einem ersten Abschnitt (52), wie durch den Abstand von der Außenfläche (23) zu dem im Wesentlichen planen ersten Abschnitt (25) gemessen, größer als die Dicke der geschweißten Kontaktfahne (22) an einem zweiten Abschnitt (54)ist, wie durch den Abstand von der Auenfläche (23) zu dem im Wesentlichen planen Innenabschnitt (27) gemessen.

23. Produkt nach Anspruch 9, wobei die elektrische Anschlussklemme (20) ferner eine zweite geschweißte Kontaktfahne (200) umfasst, die einen Magnetdrahtquetschungsbegrenzer (32) umfasst.

24. Produkt nach Anspruch 9, wobei der Magnetdrahtquetschungsbegrenzer einen ersten aufgeweiteten Kontaktfahnenabschnitt (300) und einen zweiten aufgeweiteten Kontaktfahnenabschnitt (302) umfasst, die sich jeweils von der ersten geschweißten Kontaktfahne (22) erstrecken.

25. Produkt nach Anspruch 24, wobei die erste geschweißte Kontaktfahne (22) ein erstes Kontaktfahnensegment (24) und ein gegenüberliegendes zweites Kontaktfahnensegment (26) umfasst, und wobei der erste aufgeweitete Kontaktfahnenabschnitt (300) sich vom ersten Kontaktfahnensegment (24) erstreckt, und der zweite aufgeweitete Kontaktfahnenabschnitt (302) sich vom zweiten Kontaktfahnensegment (26) erstreckt.

26. Prozess, umfassend:
Bereitstellen einer Säule (56) und eines Abschnitts eines Drahtes (60), der um einen Abschnitt der Säule gewickelt wird und einen Abschnitt der Säule freiliegend lässt, und
Bereitstellen einer elektrischen Anschlussklemme (20) nach Anspruch 1.

27. Prozess nach Anspruch 26, ferner umfassend ein Schweißen des im Wesentlichen planen zweiten Abschnitts (27) an den Abschnitt des Drahtes (60), der um die Säule (56) gewickelt ist.

28. Prozess nach Anspruch 26, wobei die Säule (56) vier Seiten (62, 64, 66, 68) aufweist, und wobei die erste geschweißte Kontaktfahne (22) so ausgebildet und angeordnet wird, dass sie sich um drei Seiten der Säule (56) wickelt.

29. Prozess nach Anspruch 27, wobei die Säule (56) vier Seiten (62, 64, 66, 68) umfasst, die jeweils eine flache Fläche aufweisen, und wobei die erste geschweißte Kontaktfahne (22) ein erstes Segment (24), ein zweites Segment (26) und ein drittes Segment (28) umfasst, das zwischen das erste Segment (24) und das zweite Segment (26) eingefügt ist, und wobei die ersten, zweiten und dritten Segmente (24, 26, 28) so ausgebildet und angeordnet werden, dass sie sich derart um einen Abschnitt der Säule (56) wickeln, dass das erste Segment (24) benachbart zu einer ersten Seite (62) der Säule (56) ist, und das zweite Segment (26) benachbart zu einer zweiten Seite (64) der Säule (56) ist, und wobei das Schweißen ferner ein Anordnen einer ersten Elektrode (74) gegen die Außenfläche (23) des ersten Segments (24) und Anordnen einer zweiten Elektrode (76) gegen die Außenfläche (23) des zweiten Segments (26) und derartiges Drücken des zweiten Segments (26) und des ersten Segments gegen die Säule (56) umfasst, dass größerer Druck auf den im Wesentlichen planen ersten Abschnitt (25) des ersten Segments (24) und des zweiten Segments (26) ausgeübt wird, als auf den im Wesentlichen planen zweiten Abschnitt (27) des ersten Segments (24) und des zweiten Segments (26) der geschweißten Kontaktfahne (22) ausgeübt wird.

30. Prozess nach Anspruch 26, wobei die elektrische Anschlussklemme (20) ferner eine zweite geschweißte Kontaktfahne (200) umfasst, die eine Außenfläche (23) und eine schweißbare Innenfläche (33) umfasst, wobei die schweißbare Innenfläche (33) der zweiten geschweißten Kontaktfahne (200) einen im Wesentlichen planen ersten Abschnitt (25) und einen im Wesentlichen planen zweiten Abschnitt (27) umfasst, und wobei der ersten Abschnitt (25) und der zweite Abschnitt (27) der zweiten geschweißten Kontaktfahne (200) nicht in der gleichen Ebene liegen, und ferner umfassend ein Schweißen des im Wesentlichen planen ersten Abschnitts (25) einer zweiten geschweißten Kontaktfahne (200) an einen freiliegenden Abschnitt der Säule (56).

31. Produkt nach Anspruch 26, wobei die erste geschweißte Kontaktfahne (22) einen ersten aufgeweiteten Kontaktfahnenabschnitt (300) und einen zweiten aufgeweiteten Kontaktfahnenabschnitt (302) umfasst, wobei jeder der aufgeweiteten Kontaktfahnenabschnitte den zweiten Abschnitt (27) bildet.

32. Produkt nach Anspruch 31, wobei der erste aufgeweitete Kontaktfahnenabschnitt (300) sich von einem ersten Kontaktfahnensegment (24) der ersten geschweißten Kontaktfahne (22) erstreckt, und der zweite aufgeweitete Kontaktfahnenabschnitt (302) sich von einem zweiten Kontaktfahnensegment (26) der ersten geschweißten Kontaktfahne (22) erstreckt.

## Revendications

1. Produit comprenant :
une borne de connexion électrique (20) comprenant au moins une première patte à souder (22), la première patte à souder (22) comprenant une face extérieure (23) et une face intérieure soudable (33), la face intérieure soudable (33) comprenant une première partie plane (25) et une seconde partie plane (27), la première partie (25) et la seconde partie (27) n'étant pas dans le même plan,
**caractérisé en ce que** la première patte à souder (22) est fabriquée et conçue pour s'enrouler autour d'une partie d'une tige (56) et est fabriquée et conçue pour être soudée à la tige (56).

2. Produit selon la revendication 1, dans lequel la tige (56) a une première face plane (62) et une seconde face plane (64), et dans lequel la patte à souder (22) est fabriquée et conçue pour être soudée à la première face plane (62) ainsi qu'à la seconde face plane (64) de la tige (56).

3. Produit selon la revendication 2, dans lequel la tige (56) a quatre côtés (62, 64, 66, 68) et la première patte à souder (22) est fabriquée et conçue pour s'enrouler autour d'au moins trois des quatre côtés de la tige (56).

4. Produit selon la revendication 2, dans lequel la tige (56) comprend une première face plane (62) et une seconde face plane (64), et la patte à souder (22) est fabriquée et conçue pour s'enrouler autour de la partie supérieure (63) d'une tige et d'au moins une partie de la première face plane (62) et d'une partie de la seconde face plane (64).

5. Produit selon la revendication 1, dans lequel la borne (20) comprend un matériau de base revêtu d'au moins un premier revêtement comprenant de l'étain.

6. Produit selon la revendication 1, comprenant en outre une tige (56), et dans lequel la borne (20) comprend un matériau de base et au moins un premier revêtement comprenant de l'étain, et dans lequel la tige (56) comprend un matériau de base et au moins un premier revêtement comprenant de l'étain.

7. Produit selon la revendication 1, dans lequel la première patte à souder (22) comprend une première partie de patte évasée (300) et une seconde partie de patte évasée (302), chacune des parties de patte évasées étant positionnée à l'extérieur d'une tige (56), et constituant chacune la seconde partie (27).

8. Produit selon la revendication 7, dans lequel la première partie de patte évasée (300) s'étend à partir d'un premier segment de patte (24) de la première patte à souder (22), et la seconde partie de patte évasée (302) s'étend à partir d'un deuxième segment de patte (26) de la première patte à souder (22).

9. Produit comprenant :
un fil (60) d'une bobine magnétique (118) d'une électrovanne (100) et une borne de connexion électrique (20) selon la revendication 1.

10. Produit selon la revendication 9, dans lequel le limiteur de serrage de fil magnétique comprend une partie matricée (32) de la première patte à souder.

11. Produit selon la revendication 9, comprenant en outre une tige (56) et un fil (60) dont une partie est enroulée autour de la tige de sorte qu'une partie de la tige soit apparente sans fil dessus, et dans lequel au moins un premier segment (24) de la première patte à souder comprend une première face (25) et une seconde face (27), la première face (25) étant soudée à la partie apparente de la tige (56) et la seconde face (27) étant soudée à au moins une partie du fil (60) enroulé autour de la tige (56).

12. Produit selon la revendication 11, le produit comprenant en outre une bobine (58), et la tige (56) étant fixée à la bobine (58).

13. Produit selon la revendication 12, dans lequel le fil (60) comprend une partie enroulée de façon répétée autour de la bobine (58) afin de former une bobine magnétique (118).

14. Produit selon la revendication 9, dans lequel la borne (20) comprend en outre une partie de connexion électrique à lame mâle (31).

15. Produit selon la revendication 9, dans lequel la borne comprend en outre une partie de connexion électrique femelle (31).

16. Produit selon la revendication 15, dans lequel la partie de connexion électrique femelle comprend une paire de mâchoires opposées (38, 42) avec une ouverture (46) entre elles.

17. Produit selon la revendication 9, dans lequel la première patte à souder (22) comprend un métal de base revêtu d'un revêtement comprenant de l'étain.

18. Produit selon la revendication 11, dans lequel la tige (56) comprend un métal de base revêtu d'un revêtement comprenant de l'étain, et dans lequel la borne (20) comprend un métal de base revêtu d'un revêtement comprenant de l'étain.

19. Produit selon la revendication 9, dans lequel la première patte à souder (22) comprend un premier segment (24), un deuxième segment (26) et un troisième segment (28) interposé entre les premier et deuxième segments (24, 26), les premier, deuxième et troisième segments (24, 26, 28) étant fabriqués et conçus pour s'enrouler autour d'une partie d'une tige (56).

20. Produit selon la revendication 9, dans lequel la première patte à souder (22) comprend un premier segment (24) et un deuxième segment opposé (26).

21. Produit selon la revendication 9, dans lequel le limiteur de serrage de fil magnétique comprend une partie matricée (32) de la première patte à souder (22).

22. Produit selon la revendication 9, dans lequel l'épaisseur de la patte à souder (22) au niveau d'une première partie (52) telle que mesurée par la distance de la face extérieure (23) à la première partie pratiquement plane (25) est supérieure à l'épaisseur de la patte à souder (22) au niveau d'une seconde partie (54) telle que mesurée par la distance de la face extérieure (23) à la partie intérieure pratiquement plane (27).

23. Produit selon la revendication 9, dans lequel la borne de connexion électrique (20) comprend en outre une seconde patte à souder (200) comprenant un limiteur de serrage de fil magnétique (32).

24. Produit selon la revendication 9, dans lequel le limiteur de serrage de fil magnétique comprend une première partie de patte évasée (300) et une seconde partie de patte évasée (302) s'étendant chacune à partir de la première patte à souder (22).

25. Produit selon la revendication 24, dans lequel la première patte à souder (22) comprend un premier segment de patte (24) et un deuxième segment de patte opposé (26), et dans lequel la première partie de patte évasée (300) s'étend à partir du premier segment de patte (24), et la seconde partie de patte évasée (302) s'étend à partir du deuxième segment de patte (26).

26. Procédé consistant à :
fournir une tige (56) et une partie d'un fil (60) enroulée autour d'une partie de la tige en laissant une partie de la tige apparente ; et
fournir une borne de connexion électrique (20) selon la revendication 1.

27. Procédé selon la revendication 26, consistant en outre à souder la seconde partie pratiquement plane (27) à la partie du fil (60) enroulée autour de la tige (56).

28. Procédé selon la revendication 26, dans lequel la tige (56) a quatre côtés (62, 64, 66, 68), et dans lequel la première patte à souder (22) est fabriquée et conçue pour s'enrouler autour de trois côtés de la tige (56).

29. Procédé selon la revendication 27, dans lequel la tige (56) comprend quatre côtés (62, 64, 66, 68) ayant chacun une face plane, et dans lequel la première patte à souder (22) comprend un premier segment (24), un deuxième segment (26) et un troisième segment (28) interposé entre le premier segment (24) et le deuxième segment (26), et dans lequel les premier, deuxième et troisième segments (24, 26, 28) sont fabriqués et conçus pour s'enrouler autour d'une partie de la tige (56) de sorte que le premier segment (24) soit adjacent à un premier côté (62) de la tige (56) et que le deuxième segment (26) soit adjacent à un second côté (64) de la tige (56), et dans lequel le soudage consiste en outre à placer une première électrode (74) contre la face extérieure (23) du premier segment (24), à placer une seconde électrode (76) contre la surface extérieure (23) du deuxième segment (26) et à presser le deuxième segment (26) et le premier segment contre la tige (56) de sorte que la pression appliquée à la première partie pratiquement plane (25) du premier segment (24) et du deuxième segment (26) soit supérieure à celle appliquée à la seconde partie pratiquement plane (27) du premier segment (24) et du deuxième segment (26) de la patte à souder (22).

30. Procédé selon la revendication 26, dans lequel la borne de connexion électrique (20) comprend en outre une seconde patte à souder (200) comprenant une face extérieure (23) et une face intérieure soudable (33), la face intérieure soudable (33) de la seconde patte à souder (200) comprenant une première partie pratiquement plane (25) et une seconde partie pratiquement plane (27), et dans lequel la première partie (25) et la seconde partie (27) de la seconde patte à souder (200) ne sont pas dans le même plan, et consistant en outre à souder la première partie pratiquement plane (25) d'une seconde patte à souder (200) à une partie apparente de la tige (56).

31. Produit selon la revendication 26, dans lequel la première patte à souder (22) comprend une première partie de patte évasée (300) et une seconde partie de patte évasée (302), chacune des parties de patte évasées constituant la seconde partie (27).

32. Produit selon la revendication 31, dans lequel la première partie de patte évasée (300) s'étend à partir d'un premier segment de patte (24) de la première patte à souder (22), et la seconde partie de patte évasée (302) s'étend à partir d'un deuxième segment de patte (26) de la première patte à souder (22).
